# EUROPEAN PATENT APPLICATION

(11) **EP 4 621 943 A1**
(43) Date of publication of application: **24.09.2025**
(21) Application number: 24214737.9
(22) Date of filing: 22.11.2024
(51) Int. Cl.: H01M 50/103, H01M 50/176, H01M 50/528, H01M 50/536, H01M 50/545, H01M 50/557, H01M 50/553

(54) **BATTERY**

(30) Priority: 21.03.2024 CN 202420557485 U
(71) Applicant: CALB Group Co., Ltd., Changzhou City, Jiangsu Province (CN)
(72) Inventor: XU, Jiuling, Changzhou City (CN); WANG, Ke, Changzhou City, Jiangsu Province (CN)
(74) Representative: Becker, Eberhard

(57) **Abstract**

A battery, including: a cell (10); a pole structure (20) electrically connected to the cell (10), wherein an area of an end face (22), facing the cell (10), of the pole structure (20) is S1; and a battery housing (30), wherein the cell is provided in the battery housing (30), the battery housing is provided with a pole through hole (31), at least a part of the pole structure (20) penetrates through the pole through hole (31) inside, and an area of the pole through hole (31) is greater than or equal to S1, wherein one end, facing the cell (10), of the pole structure (20) is provided protruding from an inner surface (32) of the battery housing (30), a size, protruding from the inner surface (32), of the pole structure (20) is a1, and S1/a1 is 7 mm-19000 mm.

## Description

### BACKGROUND

### Technical Field

The present disclosure relates to the technical field of batteries, and in particular to a battery.

### Description of Related Art

In the related art, a battery may include a battery housing, a cell, and a pole structure, and the pole structure may be provided on the battery housing, thereby realizing electrical connection with the pole structure located inside the battery housing. However, due to the limitation of the structural form of the pole structure, there may be a situation in which it is inconvenient for the pole structure and the cell to be connected with each other.

### SUMMARY

The disclosure provides a battery, so as to improve the service performance of the battery.

The disclosure provides a battery, including:
a cell;
a pole structure electrically connected to the cell, wherein an area of an end face, facing the cell, of the pole structure is S1; and
a battery housing, wherein the cell is provided in the battery housing, the battery housing is provided with a pole through hole, at least a part of the pole structure penetrates through the pole through hole inside, and an area of the pole through hole is greater than or equal to S1,
wherein one end, facing the cell, of the pole structure is provided protruding from an inner surface of the battery housing, a size, protruding from the inner surface, of the pole structure is a1, and S1/a1 is 7 mm-19000 mm.

The battery of the embodiment of the disclosure includes a cell, a pole structure and a battery housing, the cell is provided in the battery housing, and the cell is electrically connected to the pole structure provided on the battery housing. An area of the end face, facing the cell, of the pole structure is S1, and an area of the pole through hole on the battery housing is greater than or equal to S1, such that the pole structure can conveniently pass through the pole through hole, and one end, facing the cell, of the pole structure protrudes from the inner surface of the battery housing, so as to facilitate the connection between the pole structure and the cell. A size, protruding the inner surface, of the pole structure is a1, and S1/a1 is 7 mm-19000 mm, which can not only facilitate the connection between the pole structure and the cell, improve an overall assembly efficiency, increase a creepage distance between the cell and the battery housing, and reduce a risk of short circuit in the battery, but also can ensure a stability of the connection between the pole structure and the cell, reduce a risk of connection failure between the pole structure and the cell, and avoid stress concentration after the connection between the cell and the pole structure, thereby improving safe use performance of the battery.

### BRIEF DESCRIPTION OF THE DRAWINGS

For a better understanding of the present disclosure, reference may be made to the embodiments illustrated in the following drawings. The components in the drawings are not necessarily to scale, and related elements may be omitted to emphasize and clearly illustrate the features of the present disclosure. In addition, the associated elements or components may have different arrangements as known in the art. Further, in the drawings, like reference numerals designate identical or similar parts throughout the several views. In the drawings:
FIG. 1 is a partial cross-sectional schematic structural diagram of a battery according to a first exemplary implementation;
FIG. 2 is a partial cross-sectional schematic structural diagram of a battery according to a second exemplary implementation;
FIG. 3 is a partial cross-sectional schematic structural diagram of a battery according to a third exemplary implementation;
FIG. 4 is a partial cross-sectional schematic structural diagram of a battery according to a fourth exemplary implementation; and
FIG. 5 is a partial schematic structural diagram of a cell of a battery according to an exemplary implementation.

### Reference numerals:

10, cell; 11, cell body; 12, tab; 121, welding imprint; 122, first welding imprint region; 123, second welding imprint region; 20, pole structure 21, groove; 22, end face; 221, bump; 30, battery housing; 31, pole through hole; 32, inner surface; 33, recess; 34, fixing portion; 341, connection section; 342, pressing section; 40, shielding member; 50, insulating member.

### DESCRIPTION OF THE EMBODIMENTS

The technical solutions in the exemplary embodiments of the present disclosure will be described clearly and completely in combination with the drawings in the exemplary embodiments of the present disclosure. The exemplary embodiments described herein are for illustrative purposes only and are not intended to limit the scope of the present disclosure, so it is to be understood that various modifications and changes may be made to the exemplary embodiments without departing from the scope of protection of the present disclosure.

In the description of the present disclosure, the terms "first" and "second" are used for descriptive purposes only and are not to be construed as indicating or implying relative importance unless explicitly stated or limited otherwise; the term "plurality" means two or more than two; the term "and/or" includes any and all combinations of one or more of the associated listed items. In particular, reference to "the" object or "an" object is also intended to mean one of a possible plurality of such objects.

Unless otherwise specified or indicated, the terms "connection", "fixation", and the like are to be construed broadly. For example, "connection" may be fixed, or may be detachable, or may be integral, or may be electrical, or may be connected via a signal; and the "connection" may be a direct connection or an indirect connection through an intermediary. The specific meaning of the above-mentioned terms in the present disclosure can be understood by a person skilled in the art according to specific circumstances.

Further, in the description of the present disclosure, it is to be understood that the directional terms "upper", "lower", "inner", "outer", and the like, as described in terms of angles shown in the drawings and should not be construed as limiting the exemplary embodiments of the present disclosure. It will also be understood that when an element or feature is referred to as being "on", "under", or "inside" or "outside" other element(s), it can not only be directly connected "on", "under", "inside" or "outside" the other element(s), but also indirectly connected "on", "under", "inside" or "outside" the other element(s) through intervening elements.

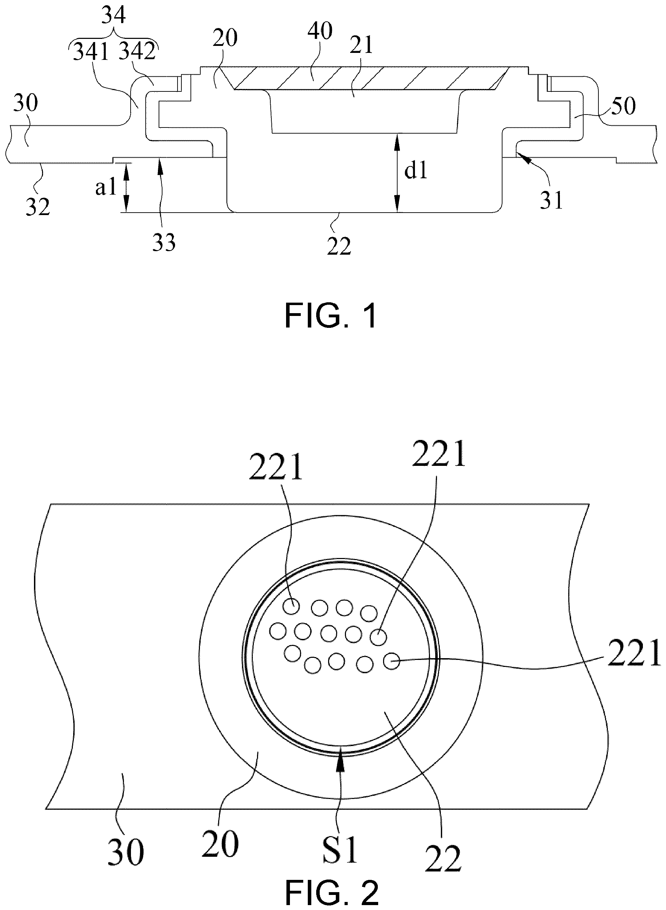

An embodiment of the disclosure provides a battery. With reference to FIGs. 1 to 5, the battery includes: a cell 10; a pole structure 20 electrically connected to the cell 10, wherein an area of an end face 22, facing the cell 10, of the pole structure 20 is S1; and a battery housing 30, wherein the cell 10 is provided in the battery housing 30, the battery housing 30 is provided with a pole through hole 31, at least a part of the pole structure 20 penetrates through the pole through hole 31 inside, and an area of the pole through hole 31 is greater than or equal to S1, wherein one end, facing the cell 10, of the pole structure 20 is provided protruding from an inner surface 32 of the battery housing 30, a size, protruding from the inner surface 32, of the pole structure 20 is a1, and S1/a1 is 7 mm-19000 mm.

The battery of one embodiment of the disclosure includes a cell 10, a pole structure 20 and a battery housing 30, the cell 10 is provided in the battery housing 30, and the cell 10 is electrically connected to the pole structure 20 provided on the battery housing 30. An area of the end face 22, facing the cell 10, of the pole structure 20 is S1, and an area of the pole through hole 31 on the battery housing 30 is greater than or equal to S1, such that the pole structure 20 can conveniently pass through the pole through hole 31, and one end, facing the cell 10, of the pole structure 20 protrudes from the inner surface 32 of the battery housing 30, so as to facilitate the connection between the pole structure 20 and the cell 10. A size, protruding the inner surface 32, of the pole structure 20 is a1, and S1/a1 is 7 mm-19000 mm, which can not only facilitate the connection between the pole structure 20 and the cell 10, improve an overall assembly efficiency, increase a creepage distance between the cell 10 and the battery housing 30, and reduce a risk of short circuit in the battery, but also can ensure a stability of the connection between the pole structure 20 and the cell 10 and reduce a risk of connection failure, thereby improving safe use performance of the battery.

It should be noted that, in conjunction with FIG. 1, the pole structure 20 has an end face 22 facing the cell 10, that is, the end face 22 can be provided protruding from the inner surface 32 of the battery housing 30, and the electrical connection between the end face 22 and the cell 10 can be conveniently realized by causing one end, facing the cell 10, of the pole structure 20 to protrude from the inner surface 32 of the battery housing 30. Since the pole structure 20 is provided protruding from the inner surface 32 of the battery housing 30, a distance between the cell 10 and the inner surface 32 of the battery housing 30 can be relatively large, thereby increasing a creepage distance between the cell 10 and the inner surface 32 of the battery housing 30 and reducing the risk of short circuit in the battery. The inner surface 32 of the battery housing 30 is a surface on which the pole structure 20 is provided, closest to the cell 10, of the battery housing 30.

As shown in FIG. 1, a size, protruding from the inner surface 32, of the pole structure 20 may be represented as a1, and as shown in FIG. 2, an area of the end face 22, facing the cell 10, of the pole structure 20 may be represented as S1. If a ratio of the area S1 of the end face 22, facing the cell 10, of the pole structure 20 to the size a1, protruding the inner surface 32, of the pole structure 20 is too large, the creepage distance between the cell 10 and the battery housing 30 may be insufficient, and the risk of short circuit may be increased. However, if the ratio of the area S1 of the end face 22, facing the cell 10, of the pole structure 20 to the size a1, protruding from the inner surface 32, of the pole structure 20 is too small, stress on the end face 22 of the pole structure 20 is concentrated, the stability of the connection structure between the cell 10 and the pole structure 20 is relatively weak, and the stress concentration of the pole structure 20 leads to an increase in the risk of connection failure with the battery housing 30 and the cell 10, which is not conducive to improving the safe use performance of the battery.

The ratio of the area S1 of the end face 22, facing the cell 10, of the pole structure 20 to the size a1, protruding from the inner surface 32, of the pole structure 20 may be 7 mm, 10 mm, 20 mm, 30 mm, 50 mm, 80 mm, 100 mm, 150 mm, 200 mm, 250 mm, 300 mm, 400 mm, 500 mm, 600 mm, 700 mm, 800 mm, 900 mm, 1000 mm, 1100 mm, 1200 mm, 1300 mm, 1400 mm, 1500 mm, 1600 mm, 1700 mm, 1800 mm, 2000 mm, 2500 mm, 2800 mm, 3000 mm, 4000 mm, 5000 mm, 6000 mm, 7000 mm, 8000 mm, 9000 mm, 10000 mm, 11000 mm, 12000 mm, 13000 mm, 14000 mm, 15000 mm, 16000 mm, 17000 mm, 18000 mm, or 19000 mm, etc.

An area of the pole through hole 31 is greater than or equal to the area S1 of the end face 22, facing the cell 10, of the pole structure 20, thereby ensuring that the pole structure 20 can pass through the pole through hole 31, such that the pole structure 20 is provided protruding from the inner surface 32, thereby facilitating the installation of the pole structure 20.

In one embodiment, the area of the end face 22, facing the cell 10, of the pole structure 20 is S1, and S1 is 20 mm²-2000 mm², which not only can effectively ensure the connection area between the pole structure 20 and the cell 10, but also can effectively ensure the discharge capacity between the pole structure 20 and the cell 10, and can effectively control an occupancy rate of internal space of the battery housing 30 by the pole structure 20.

The area S1 of the end face 22, facing the cell 10, of the pole structure 20 may be 20 mm², 22 mm², 25 mm², 28 mm², 30 mm², 32 mm², 35 mm², 38 mm², 40 mm², 42 mm², 45 mm², 48 mm², 50 mm², 52 mm², 55 mm², 58 mm², 60 mm², 62 mm², 65 mm², 68 mm², 70 mm², 80 mm², 90 mm², 100 mm², 110 mm², 120 mm², 140 mm², 150 mm², 160 mm², 170 mm², 180 mm², 190 mm², 200 mm², 210 mm², 220 mm², 240 mm², 250 mm², 260 mm², 270 mm², 280 mm², 290 mm², 300 mm², 310 mm², 320 mm², 340 mm², 350 mm², 360 mm², 370 mm², 380 mm², 390 mm², 400 mm², 410 mm², 420 mm², 440 mm², 450 mm², 460 mm², 470 mm², 480 mm², 490 mm², 500 mm², 510 mm², 520 mm², 540 mm², 550 mm², 560 mm², 570 mm², 580 mm², 590 mm², 600 mm², 700 mm², 750 mm², 800 mm², 850 mm², 900 mm², 950 mm², 1000 mm², 1050 mm², 1100 mm², 1200 mm², 1300 mm², 1400 mm², 1500 mm², 1600 mm², 1700 mm², 1800 mm², 1900 mm², or 2000 mm², etc.

In one embodiment, the size, protruding from the inner surface 32, of the pole structure 20 is a1, and a1 is 0.1 mm-3 mm, which not only facilitates the connection between the pole structure 20 and the cell 10, but also can avoid the problem that the size, protruding from the inner surface 32, of the pole structure 20 is too large and the utilization rate of the internal space of the battery housing 30 is relatively low.

A size, protruding from the inner surface 32, of the pole structure 20 may be 0.1 mm, 0.15 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1mm, 2.2 mm, 2.3 mm, 2.4 mm, 2.5 mm, 2.6 mm, 2.7 mm, 2.8 mm, 2.9 mm, or 3 mm, etc.

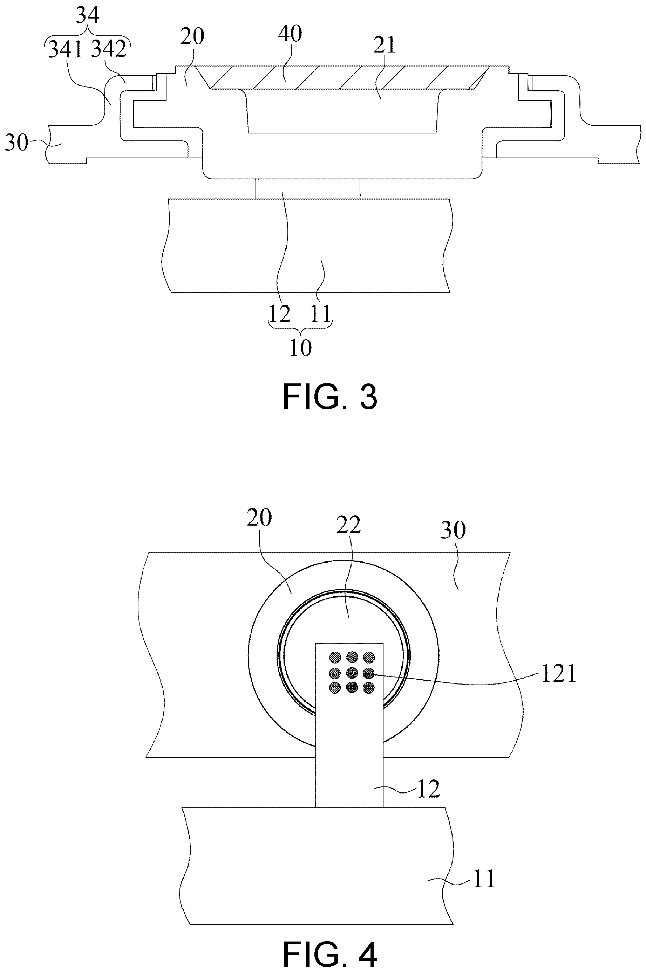

In one embodiment, as shown in FIGs. 1 and 3, a groove 21 is formed on a side, facing away from the cell 10, of the pole structure 20, thereby facilitating the arrangement, protruding from the inner surface 32, of the pole structure 20, and effectively controlling an overall weight of the pole structure 20.

In one embodiment, as shown in FIGs. 1 and 3, the battery further includes a shielding member 40, and the shielding member 40 is provided in the groove 21, which can not only increase the structural strength of the pole structure 20, but also increase heat dissipation capacity of the pole structure 20, and facilitate the subsequent electrical connection between the pole structure 20 and the busbar.

The shielding member 40 may be welded and connected to the pole structure 20, and the busbar may be welded and connected to the shielding member 40 when the batteries are grouped.

In one embodiment, as shown in FIGs. 3 to 5, the cell 10 includes a cell body 11 and a tab 12, the tab 12 is directly connected to the pole structure 20, and S1/a1 is 8 mm-17500 mm, which not only can improve the overall space utilization rate inside the battery, but also providing the pole structure 20 as protruding from the inner surface 32, which can conveniently realize rapid assembly of the tab 12 and the pole structure 20, and avoid a risk of tearing caused by insertion of the tab 12 into the battery housing 30.

The pole structure 20 is provided protruding from the inner surface 32, which can facilitate direct electrical connection between the tab 12 and the pole structure 20 and avoid bending of the tab 12. Therefore, the size a1, protruding from the inner surface 32, of the pole structure 20 can be set to be larger to realize the rapid connection between the tab 12 and the pole structure 20, but the size a1, protruding from the inner surface 32, of the pole structure 20 cannot be too large, and the ratio of the area S1 of the end face 22, facing the cell 10, of the pole structure 20 to the size a1, protruding from the inner surface 32, of the pole structure 20 cannot be too small, otherwise the strength is unstable, an area of the end face 22, connected to the tab 12, of the pole structure 20 is small, and it is easily subjected to stress concentration. By making S1/a1 be in the range of 8 mm-17500 mm, the connection strength of the pole structure 20 and the tab 12 can be ensured.

The tab 12 is directly connected to the pole structure 20, that is, the tab 12 is directly fixedly connected to the pole structure 20, and other separate electrical connection structures such as adapter pieces are not provided between the tab 12 and the pole structure 20. The tab 12 and the pole structure 20 may be directly connected by welding, bonding, or riveting, and the welding may be by one or more of resistance welding, ultrasonic welding, laser welding, or torque welding.

In one embodiment, the tab 12 is welded and connected to the pole structure 20, thereby ensuring the connection stability between the tab 12 and the pole structure 20, and the connection between the tab 12 and the pole structure 20 can be quickly realized.

The tab 12 is resistance welded and connected to the pole structure 20, which can reduce welding difficulty between the tab 12 and the pole structure 20. The thickness difference between the tab 12 and the pole structure 20 is large, and the risk of welding penetration by laser welding is large, while the connection stability of ultrasonic welding is weak. Therefore, the welding quality and welding efficiency can be effectively improved by resistance welding between the tab 12 and the pole structure 20.

The tab 12 is resistance welded and connected to the pole structure 20, and S1/a1 is greater than 8 mm, that is, the resistance welding realizes the rapid electrical connection between the protruding pole structure 20 and the tab 12 of the cell 10. If the size of S1/a1 is larger, the pole structure 20 can be avoided from protruding too much, the pole structure 20 is too thick, a resistance welding rate is too slow, and a melting rate of the pole structure 20 is too slow.

In one embodiment, as shown in FIG. 2, the end face 22, close to the cell 10, of the pole structure 20 is provided with at least two bumps 221, the bumps 221 are welded and connected to the tab 12, and a spacing between at least two adjacent bumps 221 is 0.01 mm-10 mm. The setting of bumps 221 can not only ensure sufficient contact area between the pole structure 20 and the tab 12 to ensure the connection stability between the pole structure 20 and the tab 12, but also can conveniently use resistance welding to form the welding connection between the bumps 221 and the tab 12. On the basis of ensuring the spacing between two adjacent bumps 221, the strength of the welding connection between the bumps 221 and the tab 12 can be ensured, and increasing of the manufacturing cost of the pole structure 20 due to the proximity of the bumps 221 can be avoided.

A spacing between two adjacent bumps 221 may be 0.01 mm, 0.02 mm, 0.05 mm, 0.1 mm, 0.2 mm, 0.3 mm, 0.4 mm, 0.5 mm, 0.8 mm, 1 mm, 1.2 mm, 1.5 mm, 1.8 mm, 2 mm, 2.2 mm, 2.5 mm, 2.8 mm, 3 mm, 3.2 mm, 3.5 mm, 3.8 mm, 4 mm, 4.2 mm, 4.5 mm, 4.8 mm, 5 mm, 5.2 mm, 5.5 mm, 5.8 mm, 6 mm, 6.2 mm, 6.5 mm, 6.8 mm, 7 mm, 7.2 mm, 7.5 mm, 7.8 mm, 8 mm, 8.2 mm, 8.5 mm, 8.8 mm, 9 mm, 9.2 mm, 9.5 mm, 9.8 mm, or 10 mm, etc.

In one embodiment, the tab 12 is ultrasonically welded and connected to the pole structure 20, and on the basis of ensuring a reliable connection between the tab 12 and the pole structure 20, welding penetration of the tab 12 can also be avoided, thereby ensuring the connection strength between the tab 12 and the pole structure 20.

Ultrasonic welding requires less heat than laser welding, so it is possible to effectively reduce the risk of and prevent the welding penetration of the tab 12.

In one embodiment, as shown in FIG. 4, the tab 12 is ultrasonically welded and connected to the pole structure 20 to form a welding imprint 121, a depth of fusion of the welding imprint 121 is 0.1 mm-1.5 mm. If a size of the depth of fusion of the welding imprint 121 is too small, the connection strength of the pole structure 20 and the tab 12 is weak, and current transmission of the cell 10 is blocked; if the depth of fusion of the welding imprint 121 is too large, the ultrasonic welding generates a relatively large amount of heat, and the tab 12 is easily subject to welding penetration, resulting in the risk of serious heat generation of the tab 12 and easy fusing.

A depth of fusion of the welding imprint 121 may be 0.1 mm, 0.2 mm, 0.3 mm, 0.4 mm, 0.5 mm, 0.8 mm, 1 mm, 1.2 mm, or 1.5 mm, etc.

In one embodiment, as shown in FIG. 4, the tab 12 is ultrasonically welded and connected to the pole structure 20 to form a welding imprint 121, the welding imprint 121 is a ball tooth welding imprint, and a diameter of the ball tooth is 0.1 mm-3 mm. The formation of the ball tooth welding imprint can avoid stress concentration during welding of the tab 12 and the fracture of the tab 12. The larger the diameter of the ball tooth, the smaller the contact area between monolithic tabs, and the discharge is blocked, and the problem of virtual welding easily occurs. If the diameter of the ball teeth is too small, the stress is concentrated, and the tab 12 is directly connected to the pole structure 20 and directly stressed, and a high risk of tearing the tab 12 increases.

The diameter of the ball tooth of the ball tooth welding imprint may be 0.1 mm, 0.15 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm, etc.

FIG. 4 shows a schematic diagram of the connection of the tab 12 to the pole structure 20, wherein the location between the cell 10 and the pole structure 20 is shown in an expanded way.

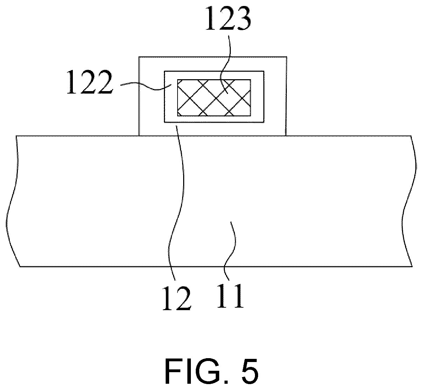

In one embodiment, as shown in FIG. 5, the tab 12 is welded and connected to the pole structure 20 to form a first welding imprint region 122 and a second welding imprint region 123 on a surface of the tab 12, an area of the second welding imprint region 123 is smaller than an area of the first welding imprint region 122, an orthographic projection of the second welding imprint region 123 along a surface on which the first welding imprint region 122 is located is positioned within the first welding imprint region 122, and a ratio of the area of the second welding imprint region 123 to the area of the first welding imprint region 122 is 0.1-0.8, which can not only ensure the connection strength between the tab 12 and the pole structure 20, reduce the risk of connection failure between the tab 12 and the pole structure 20, but also can reduce the risk of welding penetration of the tab 12, so as to ensure the discharge capability between the tab 12 and the post structure 20.

After the surface of the tab 12 itself forms the first welding imprint region 122 in a pre-welding region, the surface of the tab 12 itself is welded with the pole structure 20 to form the second welding imprint region 123, so as to improve a welding yield of the tab 12 itself, ensure a welding strength of the tab 12 and the pole structure 20, and avoid a direct stress of the tab 12, which easily causes tearing, after the tab 12 and the pole structure 20 are directly connected with each other. If the ratio of the area of the second welding imprint region 123 to the area of the first welding imprint region 122 is too small, stress concentration easily occurs in the pole structure 20 and the tab 12, which may cause damage to the tab 12. If the ratio of the area of the second welding imprint region 123 to the area of the first welding imprint region 122 is too large, the heat generation is large and the welding penetration of the tab 12 easily occurs, the heat generation of the tab 12 is severe, and the fusing easily occurs.

The ratio of the area of the second welding imprint region 123 to the area of the first welding imprint region 122 may be 0.1, 0.15, 0.2, 0.25, 0.3, 0.35, 0.4, 0.45, 0.5, 0.55, 0.6, 0.65, 0.7, 0.75, or 0.8, etc.

In one embodiment, the first welding imprint region 122 is an ultrasonic welding imprint region, and the second welding imprint region 123 is a laser welding imprint region. After the first welding imprint region 122 is formed by ultrasonic welding of a plurality of monolithic tabs, the second welding imprint region 123 is formed by laser welding, thereby reducing damage to the tab 12 during laser welding of the pole structure 20 and the tab 12 and ensuring a welding quality between the pole structure 20 and the tab 12.

The tab 12 may be composed of a plurality of monolithic tabs, and the plurality of monolithic tabs may be connected by ultrasonic welding, thereby ensuring that the tab 12 can have a certain structural strength.

In one embodiment, as shown in FIGs. 3 to 5, the cell 10 includes a cell body 11 and a tab 12, the tab 12 is directly connected to the pole structure 20, a thickness of a bottom end portion, having the end face 22, of the pole structure 20 is d1, a thickness of the tab 12 is d2, and d1/d2 is 0.3-40, such that the thickness difference between the pole structure 20 and the tab 12 is not too large, and the welding quality between the pole structure 20 and the tab 12 is ensured, thereby ensuring the safe use performance of the battery.

The bottom end portion, having the end face 22, of the pole structure 20 can be regarded as a vertical distance between a bottom wall of the groove 21 of the pole structure 20 and an outer end face, close to the cell 10, of the pole structure 20. As shown in FIG. 1, the thickness of the bottom end portion, having the end face 22, of the pole structure 20 is expressed as d1, and the thickness of the tab 12 can be regarded as a size of the thickness of the tab 12 along a direction perpendicular to a large surface of the tab 12. Further, the tab 12 can be composed of a plurality of monolithic tabs, which are bundled to form the tab 12, and the thickness of the tab 12 is a total thickness of the plurality of monolithic tabs.

A ratio of the thickness d1 of the bottom end portion, having the end face 22, of the pole structure 20 to the thickness d2 of the tab 12 may be 0.3, 0.5, 0.8, 1, 1.5, 2, 3, 4, 5, 6, 7, 8, 9, 10, 11, 11.5, 12, 13, 14, 15, 16, 17, 18, 19, 20, 21, 22, 23, 24, 25, 26, 27, 28, 29, 30, 31, 32, 33, 34, 35, 36, 37, 38, 39, or 40, etc.

In one embodiment, as shown in FIG. 1, the inner surface 32, close to the cell 10, of the battery housing 30 is provided with a recess 33, and the recess 33 communicates with the pole through hole 31, such that the recess 33 can avoid the tab 12 and the formation of false overlap between the tab 12 and the battery housing 30 can be avoided.

In one embodiment, a depth of the recess 33 is 0.05 mm-1.5 mm, which not only ensures that the recess 33 forms an effective avoidance space, but also prevents an excessive depth of the recess 33 from affecting the structural strength of the battery housing 30.

The depth of the recess 33 may be 0.05 mm, 0.08 mm, 0.1 mm, 0.2 mm, 0.3 mm, 0.4 mm, 0.5 mm, 0.8 mm, 1 mm, 1.2 mm, 1.3 mm, 1.4 mm, or 1.5 mm, etc.

In one embodiment, as shown in FIGs. 1 and 3, the battery housing 30 is provided with a fixing portion 34, at least a part of the fixing portion 34 is provided around the pole through hole 31, the fixing portion 34 is bent into a connection section 341 and a pressing section 342, the connection section 341 is provided on the battery housing 30, and the pressing section 342 is pressed on the pole structure 20, such that the pole structure 20 is sandwiched between the pressing section 342 and the battery housing 30, S1/a1≤18000 mm, thereby effectively preventing the pole structure 20 from being separated from the battery housing 30 and ensuring the safe use performance of the battery.

Since the pole structure 20 protruding from the inner surface 32 of the battery housing 30 has no limiting part, a bottom end of the pole structure 20 is easily melted into an internal structure of the battery, an impact of which leads to a connection failure between the pole structure 20 and the battery housing 30. Therefore, a top end of the pole structure 20 is limited by the fixing portion 34, the strength of the pole structure being relatively weak due to excessive protrusion of a bottom portion of the pole structure 20 is avoided. With the setting of the fixing portion 34, a size of S1/a1 can be smaller, that is, the size a1, protruding from the inner surface 32, of the pole structure 20 can be set to be a little larger, such that S1/a1≤18000 mm, and thus the electric connection between the pole structure 20 and the cell 10 is facilitated.

The battery housing 30 and the fixing portion 34 are of an integrated structure, which not only facilitates the shaping of the battery housing 30 and the fixing portion 34, but also ensures the connection strength between the battery housing 30 and the fixing portion 34, thereby improving the safe use performance of the battery.

The battery housing 30 may include a cover plate, the cover plate and the fixing portion 34 are of an integrated structure, and the cover plate having the fixing portion 34 may be formed by punching, bending, or the like using one flat plate.

The fixing portion 34 can be bent into a connection section 341 and a pressing section 342. For example, the fixing portion 34 can effectively fix the pole structure by means of flanging and riveting, thereby improving the safety and stability performance of the pole structure.

It should be noted that two pole structures 20 may be provided on the battery housing 30, the cell 10 may include two tabs 12, and the two tabs 12 may be conveniently electrically connected to the two pole structures 20.

In one embodiment, an insulating member 50 may be provided between the battery housing 30 and the pole structure 20, as shown in FIG. 1.

Note that the battery includes a cell and an electrolyte, and a minimum unit capable of performing an electrochemical reaction such as charge/discharge. A cell refers to a unit formed by winding or laminating a stack comprising a first pole piece, a partition material, and a second pole piece. When the first pole piece is a positive plate, the second pole piece is a negative plate. The polarities of the first pole piece and the second pole piece may be interchanged. The first pole piece and the second pole piece are coated with an active material.

In one embodiment, the battery may be a quadrangular prism battery, and the quadrangular prism battery mainly refers to a contour of a prism shape, but it is not strictly limited whether each side of the prism is necessarily a straight line in a strict sense, and the corner between the edges is not necessarily a right angle, but may be an arc transition.

The battery can be a laminated battery, which is not only convenient to assemble, but also can be processed to obtain a battery with a longer length. Specifically, the cell is a laminated cell, and the cell has first pole pieces stacked on each other, second pole pieces electrically opposite to the first pole piece, and separator pieces provided between the first pole pieces and the second pole piece, such that a plurality of pairs of the first pole pieces and the second pole pieces are stacked to form the laminated cell.

Alternatively, the battery may be a wound type battery, that is, a first pole piece, a second pole piece electrically opposite to the first pole piece, and a separator piece provided between the first pole piece and the second pole piece are wound to obtain a wound cell.

In one embodiment, the battery may be a cylindrical battery, or alternatively, the battery may be a hexagonal prism battery. The battery may be a wound type battery, that is, a first pole piece, a second pole piece electrically opposite to the first pole piece, and a separator piece provided between the first pole piece and the second pole piece are wound to obtain a wound cell.

An embodiment of the present disclosure further provides a battery pack including the above-mentioned battery.

The battery pack of one embodiment of the disclosure includes a battery, the battery includes a cell 10, a pole structure 20 and a battery housing 30, the cell 10 is provided in the battery housing 30, and the cell 10 is electrically connected to the pole structure 20 provided on the battery housing 30. An area of the end face 22, facing the cell 10, of the pole structure 20 is S1, and an area of the pole through hole 31 on the battery housing 30 is greater than or equal to S1, such that the pole structure 20 can conveniently pass through the pole through hole 31, and one end, facing the cell 10, of the pole structure 20 protrudes from the inner surface 32 of the battery housing 30, so as to facilitate the connection between the pole structure 20 and the cell 10. A size, protruding the inner surface 32, of the pole structure 20 is a1, and S1/a1 is 7 mm-19000 mm, which can not only facilitate the connection between the pole structure 20 and the cell 10, improve an overall assembly efficiency, increase a creepage distance between the cell 10 and the battery housing 30, and reduce a risk of short circuit in the battery, but also can ensure a stability of the connection between the pole structure 20 and the cell 10 and reduce a risk of connection failure, thereby improving safe use performance of the battery pack.

In one embodiment, the battery pack is a battery module or a battery pack.

The battery module includes a plurality of batteries, and the battery module may further include an end plate and a side plate, and the end plate and the side plate are used for fixing the plurality of batteries.

It should be noted that the plurality of batteries may be formed into a battery module and installed in a battery case, and the plurality of batteries may be fixed by the end plate and the side plate. The plurality of batteries may be directly provided in the battery case, that is, there is no need to group the plurality of batteries, and at this time, the end plate and the side plate may be removed.

Other implementations of the present disclosure will be apparent to a person skilled in the art from consideration of the utility model creation in the description and practice herein. The present disclosure is intended to cover any variations, uses, or adaptations of the present disclosure following, in general, the principles of the disclosure and including such departures from the present disclosure as come within common knowledge or customary practice in the art to which the disclosure pertains.

## Claims

1. A battery, **characterized by** comprising:
a cell (10);
a pole structure (20) electrically connected to the cell (10), wherein an area of an end face (22), facing the cell (10), of the pole structure (20) is S1; and
a battery housing (30), wherein the cell (10) is provided in the battery housing (30), the battery housing (30) is provided with a pole through hole (31), at least a part of the pole structure (20) penetrates through the pole through hole (31) inside, and an area of the pole through hole (31) is greater than or equal to S1;
wherein one end, facing the cell (10), of the pole structure (20) is provided protruding from an inner surface (32) of the battery housing (30), a size, protruding from the inner surface (32), of the pole structure (20) is a1, and S1/a1 is 7 mm-19000 mm.

2. The battery according to claim 1, **characterized in that** S1 is 20 mm²-2000 mm², and/or a1 is 0.1 mm-3 mm.

3. The battery according to claim 1, **characterized in that** a side, facing away from the cell (10), of the pole structure (20) is formed with a groove (21).

4. The battery according to claim 3, **characterized in that** the battery further comprises a shielding member (40) provided within the groove (21).

5. The battery according to claim 1, **characterized in that** the cell (10) comprises a cell body (11) and a tab (12), the tab (12) is directly connected to the pole structure (20), and S1/a1 is 8 mm-17500 mm.

6. The battery according to claim 5, **characterized in that** the tab (12) is welded and connected to the pole structure (20), and the tab (12) is resistance welded and connected to the pole structure (20).

7. The battery according to claim 6, **characterized in that** the end face (22), close to the cell (10), of the pole structure (20) is provided with at least two bumps (221), the bumps (221) are welded and connected to the tab (12), and a spacing between at least two adjacent bumps (221) is 0.01 mm-10 mm; and/or
S1/a1 is greater than 8 mm.

8. The battery according to claim 5, **characterized in that** the tab (12) is ultrasonically welded and connected to the pole structure (20).

9. The battery according to claim 8, **characterized in that** the tab (12) is ultrasonically welded and connected to the pole structure (20) to form a welding imprint (121), and a depth of fusion of the welding imprint (121) is 0.1 mm-1.5 mm.

10. The battery according to claim 8, **characterized in that** the tab (12) is ultrasonically welded and connected to the pole structure (20) to form a welding imprint (121), the welding imprint (121) is a ball tooth welding imprint, and a diameter of the ball tooth is 0.1 mm-3 mm.

11. The battery according to claim 5, **characterized in that** the tab (12) is welded and connected to the pole structure (20) to form a first welding imprint region (122) and a second welding imprint region (123) on a surface of the tab (12), an area of the second welding imprint region (123) is smaller than an area of the first welding imprint region (122), an orthographic projection of the second welding imprint region (123) along a surface on which the first welding imprint region (122) is located is positioned within the first welding imprint region (122), and a ratio of the area of the second welding imprint region (123) to the area of the first welding imprint region (122) is 0.1-0.8.

12. The battery according to claim 11, **characterized in that** the first welding imprint region (122) is an ultrasonic welding imprint region, and the second welding imprint region (123) is a laser welding imprint region.

13. The battery according to claim 1, **characterized in that** the cell (10) comprises a cell body (11) and a tab (12), the tab (12) is directly connected to the pole structure (20), a thickness of a bottom end portion, having the end face (22), of the pole structure (20) is d1, a thickness of the tab (12) is d2, and d1/d2 is 0.3-40.

14. The battery according to any one of claims 1 to 13, **characterized in that** a recess (33) is provided on the inner surface (32), close to the cell (10), of the battery housing (30) and the recess (33) communicates with the pole through hole (31).

15. The battery according to claim 14, **characterized in that** a depth of the recess (33) is 0.05 mm-1.5 mm.

16. The battery according to any one of claims 1 to 13, **characterized in that** the battery housing (30) is provided with a fixing portion (34), at least a part of the fixing portion (34) is provided around the pole through hole (31), the fixing portion (34) is bent into a connection section (341) and a pressing section (342), the connection section (341) is provided on the battery housing (30), the pressing section (342) is pressed on the pole structure (20) such that the pole structure (20) is sandwiched between the pressing section (342) and the battery housing (30), and S1/a1≤18000 mm.

17. The battery according to any one of claims 1 to 13, **characterized in that** the battery is a quadrangular prism battery.
